# EUROPEAN PATENT APPLICATION

(11) **EP 4 776 043 A1**
(43) Date of publication of application: **15.07.2026**
(21) Application number: 24862743.2
(22) Date of filing: 30.08.2024
(51) Int. Cl.: G02B 6/36, G02B 6/255

(54) **OPTICAL CONNECTOR**

(30) Priority: 08.09.2023 JP 2023146072
(71) Applicant: Sumitomo Electric Optifrontier Co., Ltd., Yokohama-shi, Kanagawa 244-8589 (JP)
(72) Inventor: FUJIHARA Yuto, Yokohama-shi, Kanagawa 244-8589 (JP); SHIBATA Masahiro, Yokohama-shi, Kanagawa 244-8589 (JP)
(74) Representative: TBK
(86) International application number: PCT/JP2024/031366
(87) International publication number: WO 2025/053091

(57) **Abstract**

An optical connector of the present disclosure comprises: a ferrule member configured to hold a built-in fiber fusion-spliced to another optical fiber; a tubular housing including a front end and a rear end positioned opposite the front end, the housing holding the ferrule member; and a fusion splice protection sleeve accommodated in the housing, arranged closer to the rear end than the ferrule member, and configured to cover a fusion splice portion between the built-in fiber and the other optical fiber. The fusion splice protection sleeve is arranged at a position shifted in a direction toward the front end from the rear end inside the housing.

## Description

### Technical Field

The present disclosure relates to an optical connector. This application claims priority based on Japanese Patent Application No. 2023-146072 filed on September 8, 2023, the entire contents of which are incorporated herein by reference.

### Background Art

Patent Literature 1 to 4 disclose optical connectors to which an optical fiber cable including a plurality of optical fibers is assembled. For example, the optical connector disclosed in Patent Literature 1 includes a ferrule member, a fusion splice protection sleeve, a front housing, and a rear housing. The ferrule member holds a plurality of built-in fibers respectively fusion-spliced to a plurality of optical fibers. The fusion splice protection sleeve protects a fusion splice portion between the plurality of optical fibers and the plurality of built-in fibers. The front housing accommodates the ferrule member and a part of the fusion splice protection sleeve. The rear housing is connected to the front housing and accommodates the fusion splice protection sleeve in cooperation with the front housing.

### Citation List

### Patent Literature

[Patent Literature 1] PCT International Publication No. WO/2012/096246
[Patent Literature 2] Japanese Unexamined Patent Publication No. 2011-075829
[Patent Literature 3] Japanese Unexamined Patent Publication No. 2013-109351
[Patent Literature 4] Japanese Unexamined Patent Publication No. 2013-134457

### Summary of Invention

An optical connector of the present disclosure includes: a ferrule member configured to hold a built-in fiber fusion-spliced to another optical fiber; a tubular housing including a front end and a rear end positioned opposite the front end, the housing holding the ferrule member; and a fusion splice protection sleeve accommodated in the housing, arranged closer to the rear end than the ferrule member, and configured to cover a fusion splice portion between the built-in fiber and the other optical fiber. The fusion splice protection sleeve is arranged at a position shifted in a direction toward the front end from the rear end inside the housing.

### Brief Description of Drawings

FIG. 1 is a perspective view showing the external appearance of an optical connector according to an embodiment.
FIG. 2 is a sectional view showing an optical fiber cable of the optical connector.
FIG. 3 is a plan view showing a front portion of the optical connector.
FIG. 4 is a sectional view showing the front portion of the optical connector.
FIG. 5 is another sectional view showing the front portion of the optical connector.
FIG. 6 is a sectional view showing a rear portion of the optical connector.

### Embodiments of the Invention

### [Problems to be Solved by Present Disclosure]

When the above-described optical connector is used, for example, a posture of a rear housing relative to a front housing may vary due to bending stress applied to an optical fiber cable, and consequently distortion originating from a connection portion between the front housing and the rear housing may occur in the optical connector. When this distortion occurs, the risk that a fusion splice protection sleeve will interfere with other components inside the optical connector increases. This internal interference of the fusion splice protection sleeve may cause a defect such as damage to an optical fiber.

The present disclosure provides an optical connector capable of reducing the risk of internal interference of a fusion splice protection sleeve.

### [Advantageous Effects of Present Disclosure]

The optical connector of the present disclosure can reduce the risk of internal interference by the fusion splice protection sleeve.

### [Description of Embodiments of Present Disclosure]

According to the optical connector of the present disclosure, the risk of internal interference of the fusion splice protection sleeve can be reduced.
(1) An optical connector of the present disclosure includes: a ferrule member configured to hold a built-in fiber fusion-spliced to another optical fiber; a tubular housing including a front end and a rear end positioned opposite the front end, the housing holding the ferrule member; and a fusion splice protection sleeve accommodated in the housing, arranged near the rear end with respect to the ferrule member, and configured to cover a fusion splice portion between the built-in fiber and the other optical fiber. The fusion splice protection sleeve is arranged at a position shifted in a direction toward the front end from the rear end inside the housing.
   In the above optical connector, it is assumed that a posture of another member connected to the rear end of the housing changes and distortion occurs in the optical connector when bending stress is applied, and the fusion splice protection sleeve is arranged at the position shifted in a direction toward the front end from the rear end of the housing, which is the origin of this distortion. That is, in the optical connector described above, the fusion splice protection sleeve is accommodated within the housing so that the fusion splice protection sleeve does not protrude from the rear end of the housing. When the fusion splice protection sleeve is arranged to be contained within the housing in this way, compared to when the fusion splice protection sleeve protrudes from the rear end of the housing, the risk that the fusion splice protection sleeve will interfere with other components due to a change in a posture of another member connected to the rear end of the housing can be reduced. Accordingly, even if distortion occurs in accordance with the application of bending stress in the above-described optical connector, the risk of internal interference of the fusion splice protection sleeve can be reduced.
(2) The optical connector according to the above-described (1) includes: a first housing that is the housing configured to hold the ferrule member; a tubular second housing including an insertion portion inserted from the rear end of the first housing and a facing portion configured to face the rear end; and a spring accommodated in the first housing and configured to face the ferrule member in a state in which the fusion splice protection sleeve is covered by the spring. The insertion portion of the second housing may accommodate the fusion splice protection sleeve and abut against the spring. When the insertion portion of the second housing extends inside the first housing in this way, because a portion where the second housing overlaps the first housing becomes longer, the posture of the second housing relative to the first housing easily becomes stable. As a result, distortion that may occur in the optical connector when bending stress is applied can be reduced. Thereby, the risk of the internal interference of the fusion splice protection sleeve can be reduced more effectively.
(3) The optical connector according to the above-described (1) or (2) may include: a first housing that is the housing configured to hold the ferrule member; a tubular second housing including an insertion portion inserted from the rear end of the first housing and a facing portion configured to face the rear end; and a tubular third housing configured to accommodate the first housing and arranged closer to the front end than the rear end. The first housing may include a pair of outer wall surfaces exposed from the third housing and extending to the rear end. The pair of outer wall surfaces may be arranged at a pair of positions between which the insertion portion is sandwiched, and a concave portion may be formed in each of the pair of outer wall surfaces. In this case, concave portions of the pair of outer wall surfaces exposed from the third housing and extending to the rear end in the first housing can be used as gripping portions to be held by fingertips when the optical connector is connected to another optical connector. Thereby, workability during the connection of the optical connector can be improved.
(4) The optical connector according to any one of the above-described (1) to (3) may include: a first housing that is the housing configured to hold the ferrule member; a tubular second housing including an insertion portion inserted from the rear end of the first housing and a facing portion configured to face the rear end; and a tubular third housing configured to accommodate the first housing and arranged closer to the front end than the rear end. The first housing may include an outer wall surface exposed from the third housing and extending to the rear end. An engagement hole penetrating in a direction intersecting the outer wall surface may be formed in the outer wall surface. A latch protruding from an outer surface of the insertion portion and engaging with the engagement hole may be formed in the insertion portion. In this case, the engagement hole of the outer wall surface of the first housing exposed from the third housing and extending to the rear end and the latch of the outer surface of the insertion portion of the second housing can be used as a connection structure for connecting the first and second housings. Using this connection structure, the first housing and the second housing can be easily connected.

### [Details of Embodiments of Present Disclosure]

Specific examples of an optical connector according to the present disclosure will be described below with reference to the drawings. The present disclosure is not limited to these examples, but is defined by the scope of the claims, and is intended to include all modifications within the meaning and scope equivalent to the claims. In the following description, identical reference signs denote identical elements in the drawings, and redundant descriptions will be omitted as appropriate. In the following description, the term "front" refers to a direction from the optical connector toward another optical connector serving as a connection target. The term "rear" refers to an opposite direction.

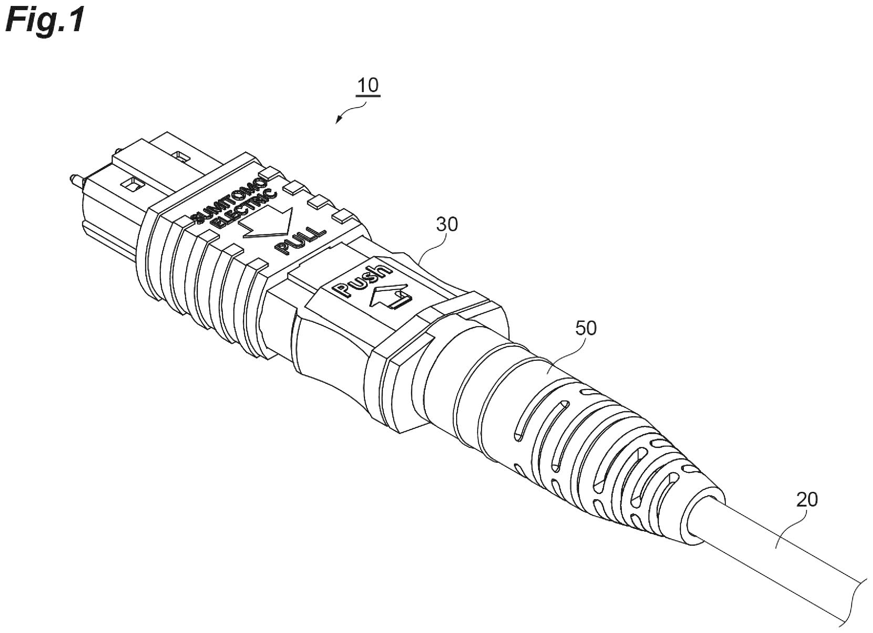

FIG. 1 is a perspective view showing the external appearance of an optical connector 10 according to the present embodiment. The optical connector 10 is connected to another optical connector that is a connection target by being inserted into an adapter. As shown in FIG. 1, the optical connector 10 includes, for example, an optical fiber cable 20, a housing 30, and a boot 50.

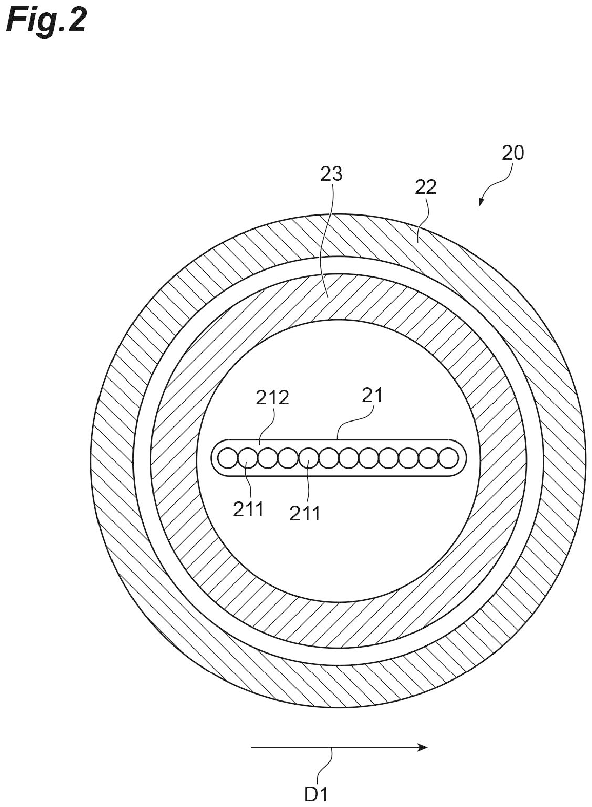

FIG. 2 is a view showing a cross-section perpendicular to a central axis of the optical fiber cable 20. As shown in FIG. 2, the optical fiber cable 20 includes, for example, an optical fiber tape core 21, a sheath (outer sheath) 22, and a tension member 23. The optical fiber tape core 21 includes, for example, a plurality (twelve in an example) of optical fibers 211, and a resin coating 212 configured to collectively cover the plurality of optical fibers 211. The plurality of optical fibers 211 are aligned in an array along a direction D1 perpendicular to the central axis of the optical fiber cable 20. The sheath 22 is a resin layer surrounding the optical fiber tape core 21. The sheath 22 has, for example, a cylindrical shape. The sheath 22 accommodates the optical fiber tape core 21 inside. The tension member 23 is, for example, a fibrous member arranged between the optical fiber tape core 21 and the sheath 22. When a pulling force is applied to the optical fiber cable 20, the tension member 23 resists the force, thereby preventing the optical fiber 211 from breaking.

FIG. 1 is referred to again. The housing 30 is a housing that accommodates the front end portion of the optical fiber cable 20. The housing 30 is formed, for example, of a resin material. The housing 30 has, for example, a hollow cylindrical shape.

The boot 50 is, for example, cylindrical and gradually decreases in an outer diameter toward the rear end. The boot 50 is attached to the rear end portion of the housing 30. The boot 50 surrounds and protects a part of the optical fiber cable 20 extending from the housing 30. The boot 50 is formed, for example, of a flexible resin material.

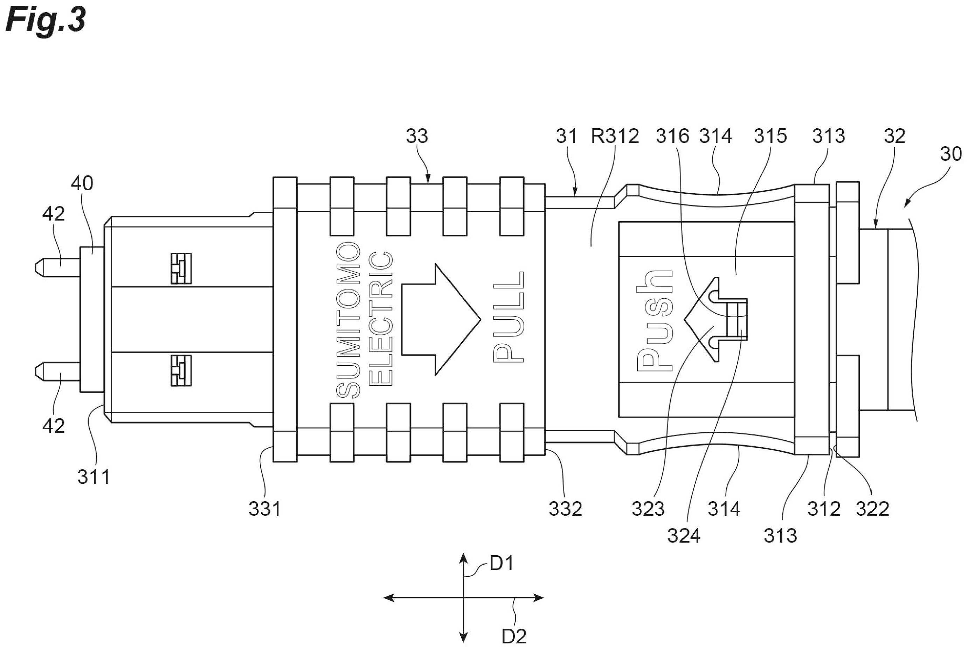

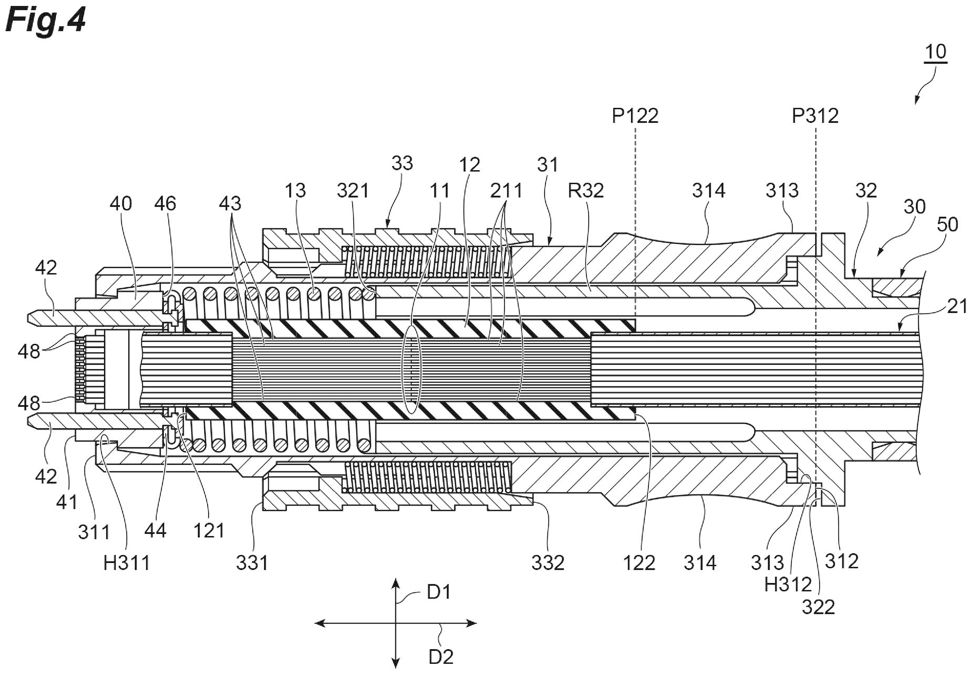

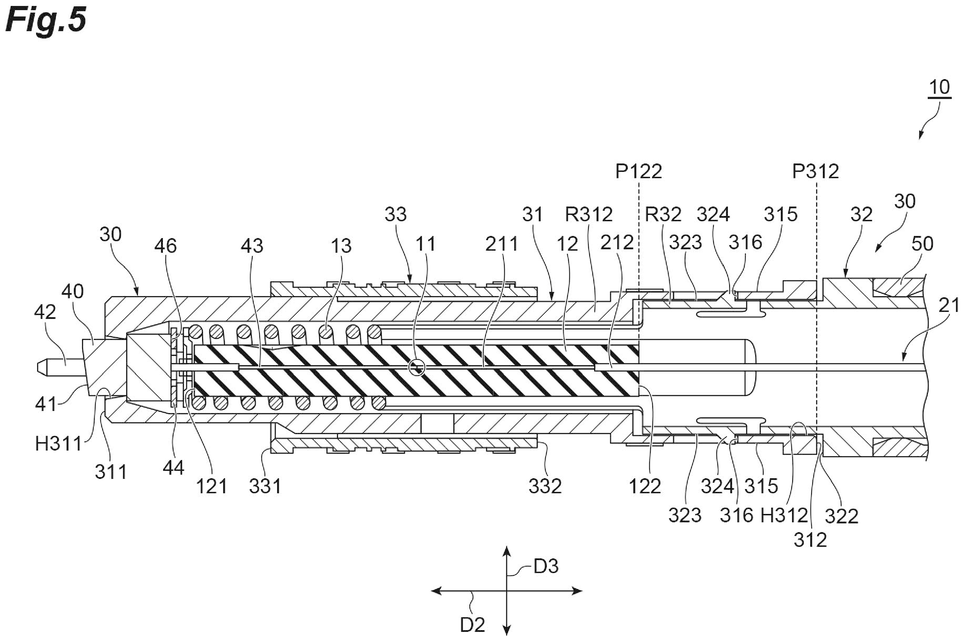

FIG. 3 is a plan view showing the front portion of the optical connector 10. FIG. 4 is a sectional view of the front portion of the optical connector 10 and shows a side cross-section along the central axis of the optical fiber tape core 21. FIG. 5 shows another side cross-section along the central axis of the optical fiber tape core 21. In FIG. 4, for convenience, the illustration of the distal end portions of the built-in fibers 43 to be described below is omitted.

As shown in FIGS. 3, 4, and 5, the housing 30 includes, for example, a front housing 31 (first housing), a rear housing 32 (second housing), and an outer housing 33 (third housing). Each of the front housing 31, the rear housing 32, and the outer housing 33 has, for example, a hollow tubular shape. The front housing 31, the rear housing 32, and the outer housing 33 extend along a direction D2 (the front-rear direction) parallel to the central axis of the optical fiber cable 20 and are connected to one another. The front housing 31 is arranged in front of the rear housing 32. The front housing 31 is accommodated within the outer housing 33. The outer housing 33 is attached to the outer side of the front housing 31 so that it is movable in the direction D2.

As shown in FIGS. 4 and 5, a ferrule member 40 is held in an opening H311 formed on the front end 311 of the front housing 31. Accordingly, in the present embodiment, the "housing" that holds the ferrule member 40 is the front housing 31. The ferrule member 40 protrudes forward from the opening H311. An insertion portion R32 of the rear housing 32, which is a component separate from the front housing 31, is inserted into an opening H312 formed on the rear end 312 of the front housing 31. That is, the insertion portion R32 of the rear housing 32 is inserted inside the front housing 31 from the rear end 312 of the front housing 31. The rear housing 32 includes a facing portion 322 that faces the rear end 312 of the front housing 31 in the direction D2. The facing portion 322 is, for example, a flange portion protruding from the outer surface of the rear housing 32.

The outer housing 33 is arranged at a position shifted closer to the front end 311 in the direction D2 than the rear end 312 of the front housing 31, i.e., at a position shifted in front of the rear end 312. The outer housing 33 is, for example, positioned to accommodate a central portion of the front housing 31. Accordingly, the front end 331 of the outer housing 33 is positioned behind the front end 311 of the front housing 31. The rear end 332 of the outer housing 33 is positioned in front of the rear end 312 of the front housing 31.

A rear portion R312 of the front housing 31 extends behind the rear end 332 of the outer housing 33. The rear end 312 of the front housing 31 is exposed to the outside. The rear portion R312 includes, for example, a pair of outer wall surfaces 313 and 313 and a pair of outer wall surfaces 315 and 315. As shown in FIGS. 3 and 4, the outer wall surfaces 313 and 313 are provided at both ends of the rear portion R312 in the direction D1 and are aligned along the direction D1. The outer wall surfaces 313 and 313 extend in a direction intersecting the direction D1. A concave portion 314 is formed in each of the outer wall surfaces 313 and 313.

The concave portion 314 is recessed inward from the outer wall surface 313 in the direction D1. When viewed in a direction D3 (see FIG. 5) intersecting the direction D1 and the direction D2, the concave portion 314 has, for example, an arc shape bulging toward the center of the front housing 31 in the direction D1. The pair of concave portions 314 and 314 formed on the outer wall surfaces 313 and 313 are formed line-symmetrically with respect to the center of the front housing 31. These concave portions 314 and 314 function as gripping portions to be held by fingertips when the optical connector 10 is connected to another optical connector that is a connection target.

As shown in FIG. 5, the outer wall surfaces 315 and 315 are arranged at both ends of the rear portion R312 in the direction D3 and are aligned in the direction D3. The outer wall surfaces 315 and 315 extend along a direction intersecting the direction D3. The engagement hole 316 is formed in each of the outer wall surfaces 315 and 315. Each engagement hole 316 is, for example, a through-hole penetrating the front housing 31 in the direction D3 from the outer wall surface 315. When viewed in the direction D3, the engagement hole 316 has, for example, an arrow shape facing the front end 311 side in the direction D2 (see FIG. 3). The engagement hole 316 viewed in the direction D3 may not be limited to the arrow shape, but may also have other shapes, such as a circle, rectangle, triangle, or other polygonal shape. The engagement holes 316 and 316 formed in the outer wall surfaces 315 and 315 are formed at a pair of positions between which the insertion portion R32 of the rear housing 32 is sandwiched in the direction D3.

The insertion portion R32 of the rear housing 32 includes a pair of outer surfaces 323 and 323. These outer surfaces 323 and 323 are arranged at positions facing the outer wall surfaces 315 and 315 of the front housing 31 in the direction D3. A latch 324 is formed in each of the outer surfaces 323 and 323. Each latch 324 is, for example, a convex portion protruding outward from the outer surface 323 in the direction D3 and engaging with the engagement hole 316. The latches 324 and 324 formed on the outer surfaces 323 and 323 are formed at a pair of positions corresponding to the engagement holes 316 and 316. When the rear housing 32 is connected to the front housing 31, the latches 324 and 324 engage with the engagement holes 316 and 316, such that the latches 324 and 324 are caught in the engagement holes 316 and 316 in the direction D2. When the rear housing 32 is detached from the front housing 31, the engagement between the latches 324 and 324 and the engagement holes 316 and 316 is released.

As shown in FIGS. 4 and 5, the optical fiber tape core 21 extended forward from the distal end of the optical fiber cable 20 is extended in an inner space formed by the front housing 31 and the rear housing 32. The resin coating 212 is removed at the distal end portion of the optical fiber tape core 21, such that a plurality of optical fibers 211 are exposed from the resin coating 212.

The optical connector 10 further includes, for example, a fusion splice protection sleeve 12, a compression coil spring 13 (spring), a ferrule member 40, and a pin keeper 44.

The ferrule member 40 is provided on the front end portion of the optical connector 10. A front end surface 41 of the ferrule member 40 abuts against a ferrule member of another optical connector that is the connection target of the optical connector 10. A pair of guide pins 42 and 42 for positioning with the ferrule member of the other optical connector protrude from the front end surface 41. The ferrule member 40 is made of, for example, a resin material. A material of the ferrule member 40 may be, for example, an engineering plastic such as polyphenylene sulfide (PPS).

As shown in FIG. 4, the ferrule member 40 includes a plurality of through-holes 48 for respectively inserting a plurality of built-in fibers 43. The ferrule member 40 holds the built-in fibers 43 by accommodating distal end portions of the built-in fibers 43 in the through-holes 48. The number of built-in fibers 43 is the same as the number of optical fibers 211. The plurality of built-in fibers 43 are aligned in an array along the direction D1. The first end surfaces of the plurality of built-in fibers 43 are exposed at the front end surface 41 of the ferrule member 40 and abut against the end surfaces of a plurality of optical fibers held in the ferrule member of the other optical connector. Thereby, each of the plurality of built-in fibers 43 is optically coupled with one of a plurality of optical fibers of the other optical connector.

The pin keeper 44 is formed of a metal material. For example, the pin keeper 44 is formed by subjecting a metal plate to sheet-metal processing and bending. The pin keeper 44 is arranged to face the rear end surface 46 of the ferrule member 40 and holds the proximal end portions of the guide pins 42 that are inserted into the ferrule member 40. The pin keeper 44 may be formed of a resin material.

The plurality of built-in fibers 43 extend rearward from the rear end surface 46 of the ferrule member 40 through openings formed in the pin keeper 44. The second end surfaces of the plurality of built-in fibers 43 are fusion-spliced to end surfaces of a plurality of other optical fibers 211. Accordingly, a fusion splice portion 11 is formed between the built-in fibers 43 and the other optical fibers 211. A fusion splice protection sleeve 12 covers and protects the fusion splice portion 11, the portions of the other optical fibers 211 that are exposed from the resin coating 212, and the built-in fibers 43.

The fusion splice protection sleeve 12 is arranged to face the rear end surface 46 of the ferrule member 40 with the pin keeper 44 sandwiched therebetween. The front end 121 of the fusion splice protection sleeve 12 may abut against the pin keeper 44 in the direction D2 or may be spaced apart from the pin keeper 44 in the direction D2. The fusion splice protection sleeve 12 has, for example, a tubular shape. The fusion splice protection sleeve 12 is formed of a heat-shrinkable resin.

A compression coil spring 13 is fitted over the fusion splice protection sleeve 12 to surround the periphery of the fusion splice protection sleeve 12. A first end of the compression coil spring 13 abuts against the pin keeper 44 in the direction D2. A second end of the compression coil spring 13 abuts against the front end 321 of the insertion portion R32 of the rear housing 32 in the direction D2. The front end 321 of the rear housing 32 faces the rear end surface 46 of the ferrule member 40 in the direction D2 with the compression coil spring 13 and the pin keeper 44 sandwiched therebetween.

The compression coil spring 13 biases the ferrule member 40 forward. When the ferrule member 40 abuts against the ferrule member of another optical connector, the compression coil spring 13 is contracted, such that the ferrule member 40 abuts against the ferrule member at an appropriate pressing pressure. When the ferrule member 40 does not abut against the ferrule member of another optical connector, a flange portion 45 provided on the rear portion of the ferrule member 40 abuts against a portion around the opening H311 of the front housing 31, thereby receiving the biasing force of the compression coil spring 13.

The front housing 31 holds the ferrule member 40 and accommodates a part of the ferrule member 40, the plurality of built-in fibers 43, the pin keeper 44, exposed portions of the other optical fibers 211 exposed from the resin coating 212, the fusion splice protection sleeve 12, and the compression coil spring 13.

In the present embodiment, the fusion splice protection sleeve 12 is arranged at a position shifted in a direction toward the front end 311 from the rear end 312 of the front housing 31 holding the ferrule member 40. In FIGS. 4 and 5, a position P122 of the rear end 122 of the fusion splice protection sleeve 12 and a position P312 of the rear end 312 of the front housing 31 are shown. As shown in FIGS. 4 and 5, the position P122 of the rear end 122 of the fusion splice protection sleeve 12 is positioned in front of the position P312 of the rear end 312 of the front housing 31 (i.e., a direction from the rear end 312 toward the front end 311 in the direction D2).

Accordingly, in the present embodiment, the rear end 122 of the fusion splice protection sleeve 12 does not protrude rearward from the rear end 312 of the front housing 31 but is accommodated within the front housing 31. The rear end 312 of the front housing 31 is a portion connected to the rear housing 32, which is a component separate from the front housing 31. Therefore, for example, when bending stress is applied to the optical fiber cable 20, there is a possibility that the posture of the rear housing 32 will change with the bending stress, and the assembly angle of the rear housing 32 relative to the front housing 31 will vary. In this case, the rear housing 32 may be displaced so as to bend with respect to the front housing 31 using the rear end 312 of the front housing 31 as the origin.

In contrast, in the optical connector 10 of the present embodiment, the fusion splice protection sleeve 12 is arranged to be accommodated within the front housing 31 so that internal interference of the fusion splice protection sleeve 12 due to variation of the rear housing 32 is avoided. In the optical connector 10 of the present embodiment, each component accommodated in the front housing 31 is designed to have a reduced length in the direction D2 so that the rear end 122 of the fusion splice protection sleeve 12 is arranged at a position shifted in front of the rear end 312 of the front housing 31. A length of the front housing 31 in the direction D2 (i.e., a distance from the front end 311 to the rear end 312 in the direction D2) is, for example, from 20 mm to 35 mm. In contrast, the length of the ferrule member 40 in the direction D2 is, for example, 4 mm. A thickness of the metal plate constituting the pin keeper 44 in the direction D2 is, for example, from 0.25 to 1 mm. The length of the fusion splice protection sleeve 12 in the direction D2 is, for example, from 12 mm to 20 mm.

As described above, a configuration in which the fusion splice protection sleeve 12 is accommodated within the front housing 31 is implemented by designing the components accommodated in the front housing 31 to have shorter lengths in the direction D2. As a result of this design, the length of the rear portion R312 of the front housing 31, which extends behind the outer housing 33, is increased to a certain extent in the direction D2. Therefore, in the present embodiment, from the viewpoint of effectively utilizing the region of this rear portion R312, the above-described concave portions 314 and 314, the above-described engagement holes 316 and 316 and the like are formed in the rear portion R312.

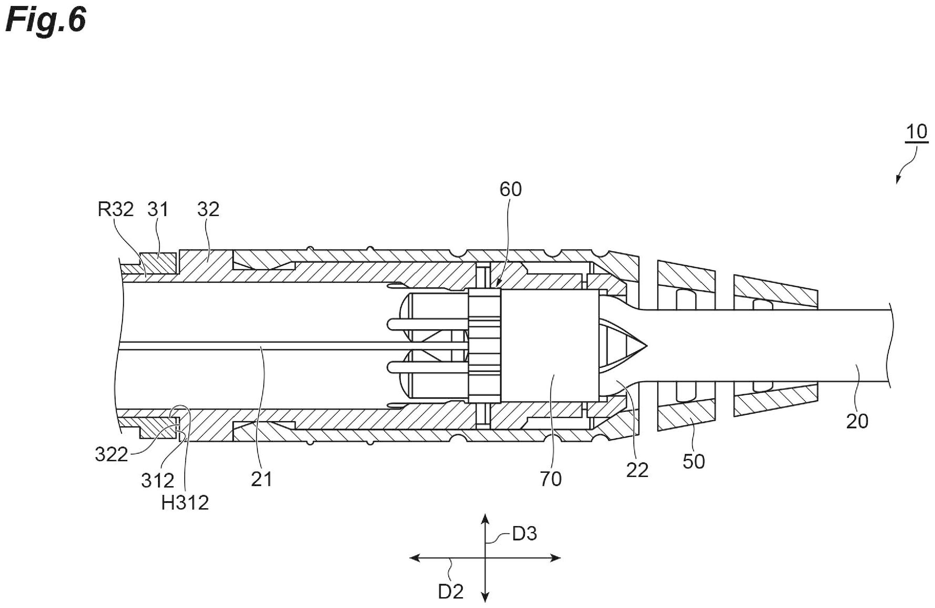

FIG. 6 is a sectional view showing a rear portion of the optical connector 10. As shown in FIG. 6, the optical connector 10 further includes an approximately cylindrical crimp seat 60 and an annular ring 70. The crimp seat 60 and the ring 70 are provided at a position near a rear end portion inside the rear housing 32. The crimp seat 60 and the ring 70 are provided for pinching and fixing the distal end portions of the sheath 22 and the tension member 23 peeled off from the optical fiber tape core 21. For this purpose, the ring 70 is arranged around the crimp seat 60 and fitted to the crimp seat 60 in a state in which the distal end portions of the sheath 22 and the tension member 23 are sandwiched between the crimp seat 60 and the ring 70. In FIG. 6, the tension member 23 is omitted for clarity. The crimp seat 60 and the ring 70 are made of, for example, a metal material or a resin material.

The effects achieved by the optical connector 10 of the present embodiment will now be described. In the present embodiment, it is assumed that the posture of the rear housing 32, which is a separate member connected to the rear end 312 of the front housing 31, changes and distortion occurs in the optical connector 10 when bending stress is applied, and the fusion splice protection sleeve 12 is arranged at a position shifted in a direction toward the front end 311 from the rear end 312 of the front housing 31 that is the origin of the distortion. That is, in the present embodiment, the fusion splice protection sleeve 12 is accommodated within the front housing 31 so that the fusion splice protection sleeve 12 does not protrude from the rear end 312 of the front housing 31. When the fusion splice protection sleeve 12 is arranged to be contained within the front housing 31 in this way, compared to when the fusion splice protection sleeve 12 protrudes from the rear end 312 of the front housing 31, the risk that the fusion splice protection sleeve 12 will interfere with other components within the rear housing 32 due to a change in a posture of the rear housing 32 can be reduced. Accordingly, in the present embodiment, even if distortion occurs in the optical connector 10 in accordance with the application of bending stress, the risk of internal interference of the fusion splice protection sleeve 12 can be reduced.

In the present embodiment, the insertion portion R32 of the rear housing 32 may accommodate the fusion splice protection sleeve 12 and may abut against the compression coil spring 13 by which the fusion splice protection sleeve 12 is covered. When the insertion portion R32 of the rear housing 32 extends into the front housing 31 in this way, because a portion where the rear housing 32 overlaps the front housing 31 becomes longer, the posture of the rear housing 32 relative to the front housing 31 easily becomes stable. As a result, it is possible to reduce distortion that may occur in the optical connector 10 when bending stress is applied. Thereby, the risk of internal interference of the fusion splice protection sleeve 12 can be more effectively reduced.

As in the present embodiment, the front housing 31 may include a pair of outer wall surfaces 313 and 313 exposed from the outer housing 33 and extending to the rear end 312. The outer wall surfaces 313 and 313 may be arranged at a pair of positions between which the insertion portion R32 is sandwiched. The concave portion 314 may be formed in each of the outer wall surfaces 313 and 313. In this case, the concave portions 314 and 314 of the outer wall surfaces 313 and 313 exposed from the outer housing 33 and extending to the rear end 312 in the front housing 31 can be used as gripping portions for holding with fingertips when the optical connector 10 is connected to another optical connector. Thereby, it is possible to improve workability during the connection of the optical connector 10.

As in the present embodiment, the front housing 31 may include the outer wall surface 315 exposed from the outer housing 33 and extending to the rear end 312. The engagement hole 316 penetrating in a direction intersecting the outer wall surface 315 may be formed in the outer wall surface 315. The latch 324 protruding from the outer surface 323 of the insertion portion R32 and engaging with the engagement hole 316 may be formed on the insertion portion R32. In this case, the engagement hole 316 of the outer wall surface 315 exposed from the outer housing 33 and extending to the rear end 312 in the front housing 31, and the latch 324 of the insertion portion R32 of the rear housing 32 can be used as a connection structure for connecting the front housing 31 and the rear housing 32. Using this connecting structure can facilitate the connection of the front housing 31 and the rear housing 32.

The present disclosure is not limited to the above-described embodiments and may be modified in various ways. For example, in the above-described embodiment, a case where the concave portion 314 and the engagement hole 316 are formed in the rear portion R312 of the front housing 31 has been described. However, the concave portion 314 and the engagement hole 316 may be formed in locations other than the rear portion R312 or may be formed in components other than the front housing 31.

### Reference Signs List

10 Optical connector
11 Fusion splice portion
12 Fusion splice protection sleeve
20 Optical fiber cable
21 Optical fiber tape core
22 Sheath (outer sheath)
23 Tension member
30 Housing
31 Front housing (first housing)
32 Rear housing (second housing)
33 Outer housing (third housing)
40 Ferrule member
41 Front end surface
42 Guide pin
43 Built-in fiber
44 Pin keeper
45 Flange portion
46 Rear end surface
48 Through-hole
50 Boot
60 Crimp seat
70 Ring
121, 311, 321, 331 Front end
122, 312, 332 rear end
211 Optical fiber
212 Resin coating
313, 315 Outer wall surface
314 Concave portion
316 Engagement hole
322 Facing portion
323 Outer surface
324 Latch
D1, D2, D3 Direction
H311, H312 Opening
P122, P312 Position
R32 Insertion portion
R312 Rear portion

## Claims

1. An optical connector comprising:
a ferrule member configured to hold a built-in fiber fusion-spliced to another optical fiber;
a tubular housing including a front end and a rear end positioned opposite the front end, the housing holding the ferrule member; and
a fusion splice protection sleeve accommodated in the housing, arranged closer to the rear end than the ferrule member, and configured to cover a fusion splice portion between the built-in fiber and the other optical fiber,
wherein the fusion splice protection sleeve is arranged at a position shifted toward the front end from the rear end inside the housing.

2. The optical connector according to claim 1, comprising:
a first housing that is the housing configured to hold the ferrule member;
a tubular second housing including an insertion portion inserted from the rear end of the first housing and a facing portion configured to face the rear end; and
a spring accommodated in the first housing and configured to face the ferrule member in a state in which the fusion splice protection sleeve is covered by the spring,
wherein the insertion portion of the second housing accommodates the fusion splice protection sleeve and abuts against the spring.

3. The optical connector according to claim 1 or 2, comprising:
a first housing that is the housing configured to hold the ferrule member;
a tubular second housing including an insertion portion inserted from the rear end of the first housing and a facing portion configured to face the rear end; and
a tubular third housing configured to accommodate the first housing and arranged closer to the front end than the rear end,
wherein the first housing includes a pair of outer wall surfaces exposed from the third housing and extending to the rear end,
wherein the pair of outer wall surfaces are arranged at a pair of positions between which the insertion portion is sandwiched, and
wherein a concave portion is formed in each of the pair of outer wall surfaces.

4. The optical connector according to any one of claims 1 to 3, comprising:
a first housing that is the housing configured to hold the ferrule member;
a tubular second housing including an insertion portion inserted from the rear end of the first housing and a facing portion configured to face the rear end; and
a tubular third housing configured to accommodate the first housing and arranged closer to the front end than the rear end,
wherein the first housing includes an outer wall surface exposed from the third housing and extending to the rear end,
wherein an engagement hole penetrating in a direction intersecting the outer wall surface is formed in the outer wall surface, and
wherein a latch protruding from an outer surface of the insertion portion and engaging with the engagement hole is formed in the insertion portion.
